# EUROPÄISCHE PATENTANMELDUNG

(11) **EP 4 729 251 A1**
(43) Veröffentlichungstag der Anmeldung: **22.04.2026**
(21) Anmeldenummer: 25207833.2
(22) Anmeldetag: 09.10.2025
(51) Int. Cl.: B25J 15/00, B25J 15/04, B25J 15/06, B25J 19/02

(54) **ENDEFFEKTOR MIT EINER BILD- ODER DATENERFASSUNGSVORRICHTUNG, KOMMISSIONIERROBOTER UND VERFAHREN ZUM STEUERN EINES KOMMISSIONIERROBOTERS**

(30) Priorität: 21.10.2024 DE 102024130552
(71) Anmelder: IGZ Ingenieurgesellschaft für logistische Informationssysteme mbH, 95685 Falkenberg (DE)
(72) Erfinder: Zrenner, Johann, 95685 Falkenberg (DE)
(74) Vertreter: Strehl & Partner mbB

(57) **Zusammenfassung**

Die Erfindung geht aus von einem Endeffektor (41) für einen Kommissionierroboter (10), umfassend eine Befestigungsschnittstelle (44) zum Anschluss an eine Endschnittstelle (46) eines Greifarms (14) des Kommissionierroboters (10) und einen Sauggreifer (20) zum Greifen von zu kommissionierenden Artikeln (28), **dadurch gekennzeichnet, dass** der Endeffektor (41) eine Bild- oder Datenerfassungsvorrichtung (36) zum Erfassen von auf dem Artikel (28) vorgesehenen Identifikationsinformationen umfasst

## Beschreibung

Die Erfindung betrifft einen Endeffektor nach dem Oberbegriff des Anspruchs 1.

Das Dokument EP3235606B1 offenbart einen Mehrarm-Roboter wobei einer der Arme einen Sensor aufweist, der zusätzlich zur "regulären" Kamera weitere Daten wie Temperatur Druck, Kraft, Spannung oder Gewicht erfasst und so die Zuverlässigkeit des Pick-Vorgangs und des Schlicht-Vorgangs verbessert.

Das Dokument EP2984007B1 offenbart einen Kommissionierroboter mit zwei Kameras, die aus unterschiedlichen Winkeln in die Behälter schauen und so verdeckte Ecken vermeiden.

Im Dokument DE102019130046A1 wird ebenfalls vorgeschlagen, den Artikel beim Umlagern von einem Quellbehälter in einen Zielbehälter an einem Strich-code-Scanner und/oder QR-Code-Scanner vorbeizuführen, um Identifizierungsinformationen des Zielobjekts während der Überführung abzutasten. Ähnliches wird in US10350755B2 und der DE102007038837A1 gezeigt.

Das Patent DE 10 2010 002 317 B4 wird ein Verfahren geschützt, in dem der Artikel an einem Barcodescanner vorbeigeführt wird.

Das Dokument EP 3838806 A1 bildet den nächstliegenden Stand der Technik und offenbart einen Endeffektor nach dem Oberbegriff des Anspruchs 1.

Die Kommissionierroboter nach dem Stand der Technik haben noch Verbesserungsbedarf in der nahtlosen Integration des Barcode-Scanvorgangs in den Kommissioniervorgang.

Der Erfindung liegt die Aufgabe zugrunde, einen Endeffektor bereitzustellen, mit dessen Hilfe ein des Barcode-Scanvorgangs nahtlos in den Kommissioniervorgang integriert werden kann und aufwändige Zwischenschritte oder zusätzliche Arbeitsschritte vermieden werden können.

Die Aufgabe wird gelöst durch einen Endeffektor mit den Merkmalen des Anspruchs 1. Vorteilhafte Ausgestaltungen der Erfindung ergeben sich aus den Unteransprüchen.

Die Erfindung betrifft einem Endeffektor für einen Kommissionierroboter, umfassend eine Befestigungsschnittstelle zum Anschluss an eine Endschnittstelle eines Greifarms des Kommissionierroboters und einen Sauggreifer zum Greifen von zu kommissionierenden Artikeln,
Es wird vorgeschlagen, dass der Endeffektor eine Bild- oder Datenerfassungsvorrichtung zum Erfassen von auf dem Artikel vorgesehenen Identifikationsinformationen umfasst. Durch die Integration der Bild- oder Datenerfassungsvorrichtung in den Endeffektor kann diese im Verlauf des Greif- und Transportvorgangs des Artikels arbeiten und es müssen keine zusätzlichen Schritte ausgeführt werden oder Umwege in Kauf genommen werden, um die Identifikationsinformationen zu lesen. In bevorzugten Ausführungsbeispielen ist die Bild- oder Datenerfassungsvorrichtung ein Barcode- oder QR-Code-Lesegerät und Identifikationsinformationen liegen als Barcode oder QR-Code auf einer Verpackung oder einem Etikett des Artikels vor. Es sind aber auch andere Ausgestaltungen denkbar, in denen die Bild- oder Datenerfassungsvorrichtung eine Kamera ist und eine Steuerung mit Hilfe geeigneter Bildverarbeitungsalgorithmen die Identifikationsinformationen ausliest.

In einer besonders vorteilhaften Ausgestaltung der Erfindung umfasst der Endeffektor wenigstens zwei Module, wobei ein erstes der Module die Bild- oder Datenerfassungsvorrichtung umfasst und das zweite der Module den Sauggreifer umfasst. Dadurch ist ein flexibel an den Anwendungsfall anpassbarer Endeffektor realisierbar.

Ferner wird vorgeschlagen, dass das zweite der Module mit dem Sauggreifer von der Endschnittstelle eines Greifarms lösbar und austauschbar ist, ohne das erste Modul von der Endschnittstelle zu lösen. Da in der Praxis Sauggreifer abhängig von der Art des Artikels häufiger gewechselt werden müssen, kann dadurch vermieden werden, dass jeweils auch die Bild- oder Datenerfassungsvorrichtung gewechselt werden muss, was Umrüstzeiten verkürzt. In einer besonders vorteilhaften Ausgestaltung der Erfindung schlagen die Erfinder in diesem Kontext vor, dass das erste Modul eine Sekundärschnittstelle zum Anschluss des zweiten Moduls mit dem Sauggreifer umfasst, so dass das zweite Modul mittelbar über das erste Modul mit der Endschnittstelle des Greifarms verbunden ist.

Ein weiterer Aspekt der Erfindung betrifft einen Kommissionierroboter der oben beschriebenen Art, der vorzugsweise eine zweite Bild- oder Datenerfassungsvorrichtung lesen von Identifikationsinformationen auf Seitenflächen des Artikels umfasst, die aus der Richtung der Bild- oder Datenerfassungsvorrichtung nicht lesbar sind. Dadurch kann auch dann der Scanvorgang in den Kommissioniervorgang integriert werden, wenn die Identifikationsinformationen auf den Seitenflächen oder der Unterseite des Artikels angeordnet ist. Dabei ist in besonders vorteilhaften Ausgestaltungen die zweite Bild- oder Datenerfassungsvorrichtung an einem Sockel des Kommissionierroboters montiert.

Ferner wird vorgeschlagen, dass der Kommissionierroboter oder ein den Kommissionierroboter umfassendes Robotersystem einen oder mehrere ortsfest oder bewegbar angeordnete Spiegel umfasst, die so angeordnet sind, dass die Endeffektor angeordnete eine Bild- oder Datenerfassungsvorrichtung die Identifikationsinformationen über den Spiegel von einer Seitenfläche des Artikels oder von einer Unterseite des Artikels ablesen kann, während der Artikel vom Sauggreifer gehalten wird. Dadurch können die Identifikationsinformationen ohne zusätzlichen Arbeitsschritt auch von ansonsten uneinsehbaren Flächen abgelesen werden. Dabei kann die Steuerung den Artikel um die Längsachse des Sauggreifers drehen oder den Spiegel drehen oder bewegen, um verschiedene Flächen einsehen zu können.

Ein weiterer Aspekt der Erfindung Robotersystem mit einem Kommissionierroboter der oben beschriebenen Art und einer Werkzeugwechselvorrichtung zur Bereitstellung verschiedenartiger Sauggreifer, wobei der Kommissionierroboter eine Steuerung und eine Bilderfassungsvorrichtung umfasst, die wobei die Steuerung dazu ausgelegt ist, mit Hilfe der Daten der Bilderfassungsvorrichtung einen zu kommissionierenden Artikel zu erkennen und abhängig von dem erkannten Artikel den Greifarm so zu steuern, dass ein geeigneter Sauggreifer an der Endschnittstelle eines Greifarms befestigt wird. Die Bilderfassungsvorrichtung zum Erkennen des Artikels kann getrennt von der Bild- oder Datenerfassungsvorrichtung als eigenständige Kamera, insbesondere 3D-Kamera, ausgebildet sein oder auch mit dieser zusammengefasst werden.

Ein weiterer Aspekt der Erfindung betrifft ein Verfahren zum Steuern eines Kommissionierroboters der oben beschriebenen Art, umfassend die Schritte Erfassen einer Position von Identifikationsinformationen auf einem Artikel, Steuern des Greifarms derart, dass die Bild- oder Datenerfassungsvorrichtung in Richtung der Identifikationsinformationen ausgerichtet ist, Lesen der Identifikationsinformationen mit Hilfe der Bild- oder Datenerfassungsvorrichtung, Ermitteln eines Greifpunkts des Artikels; Bewegen des Greifarms derart, dass der Sauggreifer in Richtung eines Greifpunkts des Artikels ausgerichtet ist, und Greifen des Artikels mit dem Sauggreifer.

Dadurch kann das Scannen des Barcodes auch dann gut in den Kommissioniervorgang integriert werden, wenn die im Betrieb vom Sauggreifer verdeckte Umgebung des Greifpunkts mit dem Bereich, in dem die Identifikationsinformationen vorliegen, überlappt.

In einer besonders vorteilhaften Ausgestaltung erfolgt das Ermitteln des Greifpunkts des Artikels abhängig von den Identifikationsinformationen. Auf diese Weise können z.B. inhomogene Gewichtsverteilungen innerhalb des Volumens des Artikels abhängig von den Identifikationsinformationen aus einer Datenbank ausgelesen werden und berücksichtigt werden.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen. Der Fachmann wird die Merkmale auch einzeln betrachten und zu weiteren Kombinationen oder Unterkombinationen zusammenfassen, um die Erfindung, wie sie in den Ansprüchen definiert ist, an seine Bedürfnisse oder an spezielle Anwendungsbereiche anzupassen.

Dabei zeigen:
Fig. 1 einen Kommissionierroboter nach einem ersten Ausführungsbeispiel der Erfindung;
Fig. 2 einen Endeffektor des Kommissionierroboters gemäß Fig. 1;
Fig. 3a - 3c Illustrationen zur Funktionsweise einer Werkzeugwechselvorrichtung eines erfindungsgemäßen Kommissionierroboters;
Fig. 4 ein erfindungsgemäßes Robotersystem mit Spiegeln zum Lesen der Identifikationsinformationen auf Seitenflächen oder einer Unterseite des Artikels,
Fig. 5a - 5c Schritte eines erfindungsgemäßen Verfahrens zum Steuern eines Kommissionierroboters; und
Fig. 6a - 6b weitere Ausgestaltungen der Erfindung, in dem der Kommissionierroboter bzw. das Kommissioniersystem eine einer Ablage- und/oder Umgreifstation umfasst.

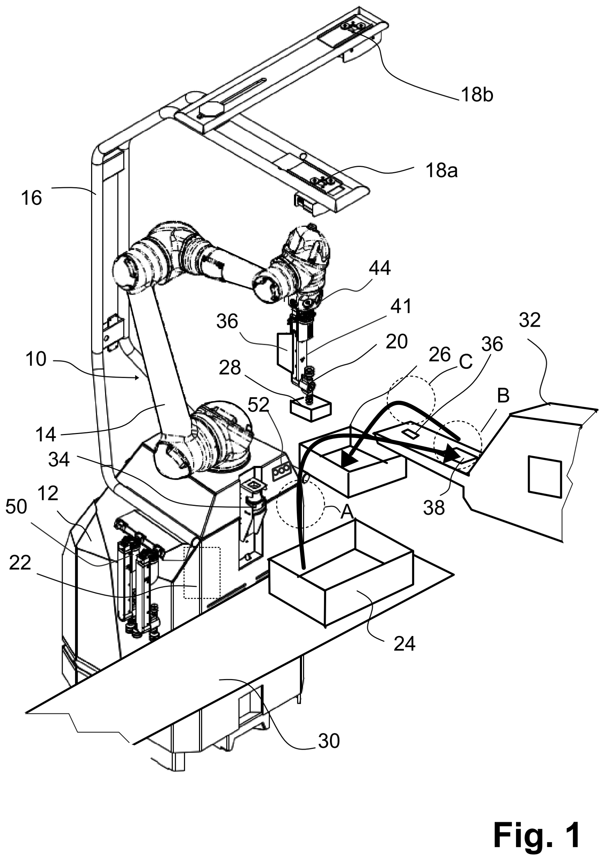

Fig. 1 zeigt einen Kommissionierroboter 10 nach einem ersten Ausführungsbeispiel der Erfindung.

Der Kommissionierroboter 10 ist ein mobiler Kommissionierroboter 10, der mit Rollen oder mit einem Hubwagen oder Gabelstapler transportiert werden kann und umfasst einen auf einem Sockel 12 montierten Einarm-Industrieroboter mit 5 oder 6 Achsen und einem Greifarm 14 mit einem Flansch zum Anschließen verschiedener Endeffektoren und einen an der Rückseite des Sockels 12 montierten Tragarm 16 für eine oder mehrere, insbesondere als 3D- bzw. Tiefenkameras ausgebildete Kameras 18a, 18b. Eine Kamera 18a detektiert Artikel 28 in einem Quellbehälter 24, der über Fördertechnik 30 angedient wird, und eine Kamera 18b detektiert Artikel in einem Zielbehälter, der über Fördertechnik (nicht dargestellt) abtransportiert wird. Am Flansch des Greifarms 14 ist ein Endeffektor 41 mit einem Sauggreifer 20 montiert und im Sockel 12 ist eine Steuerung 22 angeordnet. An einer im Betrieb einem Quellbehälter 24 zugewandten Vorderseite umfasst der Kommissionierroboter 10 eine vertikal ausgerichtete Höhenmessvorrichtung 34, die als LIDAR-Flächensensor ausgebildet ist.

Die Steuerung 22 ist durch geeignete Software dazu ausgelegt, den Greifarm 14 so zu steuern, dass ein Artikel 28 in einem Entnahmevorgang an einer Oberseite gegriffen, aus einem Quellbehälter 24 entnommen wird und in einen Zielbehälter 26 abgelegt wird, wobei die Höhenmessvorrichtung 34 während des Entnahmevorgangs in einem Bereich A der Trajektorie eine Lage einer Unterseite des Artikels 28 detektiert. Letzteres wird dadurch erreicht, dass ein Zeitpunkt, in dem der Artikel 28 eine vom der Höhenmessvorrichtung 34 überwachte Ebene verlässt, detektiert wird. Details zur Höhenmessung sind in der EP 3838806 A1 beschrieben, auf die in diesem Zusammenhang Bezug genommen wird.

Der Quellbehälter 24 und der Zielbehälter 26 sind beliebige Ladungsträger, die in der Lagertechnik üblich sind, beispielsweise Paletten oder Kisten oder Kartons, wobei die Zielbehälter 26 vorzugsweise Versandkartons sind.

Erfindungsgemäß wird vorgeschlagen, dass die Steuerung 22 dazu ausgelegt ist, den Greifarm 14 so zu steuern, dass eine Seite des Artikels 28 in einem Abschnitt B der Trajektorie den Arbeitsbereich 32a einer Etikettiervorrichtung 32 gebracht wird und mit einem Etikett versehen wird. Im Ausführungsbeispiel nach Fig. 1 ist die Seite, die mit dem Etikett versehen wird, die dem Sauggreifer 20 abgewandte Unterseite des Artikels. Dazu ist neben dem Kommissionierroboter 10 innerhalb des Aktionsradius des Greifarms 14 die Etikettiervorrichtung 32 angeordnet, die von der Steuerung 22 über geeignete Steuersignale gesteuert wird. Die Unterseite des Artikels 28 wird in den Arbeitsbereich 32a der Etikettiervorrichtung 32 gebracht, d.h. über einen als Lochsaugplatte ausgebildeten Etikettengreifer (nicht dargestellt), der das gedruckte Etikett 38 bereithält und dann mit einem Druckstoß auf die Unterseite des Artikels 28 aufbringt. In alternativen Ausgestaltungen der Erfindung wird der Artikel 28 auf das mit der Klebeseite nach oben bereitgestellte Etikett 38 aufgestellt oder aufgedrückt.

Der Kommissionierroboter 10 oder ein diesen umfassendes Kommissioniersystem umfasst ferner eine Bild- oder Datenerfassungsvorrichtung 36 zum Erfassen von Etiketten. In dem in Fig. 1 dargestellten Ausführungsbeispiel ist die Bild- oder Datenerfassungsvorrichtung 36 ein Barcodeleser der gleich neben der Etikettiervorrichtung 32 angeordnet ist bzw. in diese integriert ist. Die Steuerung 22 überprüft das Vorhandensein, die korrekte Platzierung und/oder die Lesbarkeit des Etiketts nach dem Etikettieren mit Hilfe der Bild- oder Datenerfassungsvorrichtung 36, indem sie den Greifarm 14 so steuert, dass in einem Abschnitt C der Trajektorie die mit dem Etikett versehene Unterseite des Artikels 28 über den Barcodeleser 36 geführt wird. Dadurch können Fehler beim Etikettieren vermieden werden, z.B. nicht anhaftende oder nicht lesbare Etiketten, und der Etikettiervorgang kann zuverlässig dokumentiert werden.

Schließlich wird der Artikel 28 im Zielbehälter 26 abgelegt, wobei die Etiketten an der Unterseite der Artikel 28 angeordnet sind.

Falls die Zielbehälter 26 Versandkartons sind, können diese in einem erfindungsgemäßen Verfahren von unten gepackt werden, d.h. die Laschen der Oberseite des Kartons werden geschlossen, während die Laschen am Boden des Kartons offen bleiben. Dann wird der Lieferschein eingelegt und die Artikel 28 wie oben beschrieben mit nach unten, d.h. zur kopfüber angeordneten Oberseite des Kartons hin orientierten Etiketten in den Versandkarton eingelegt und schließlich die Bodenlaschen des Kartons geschlossen.

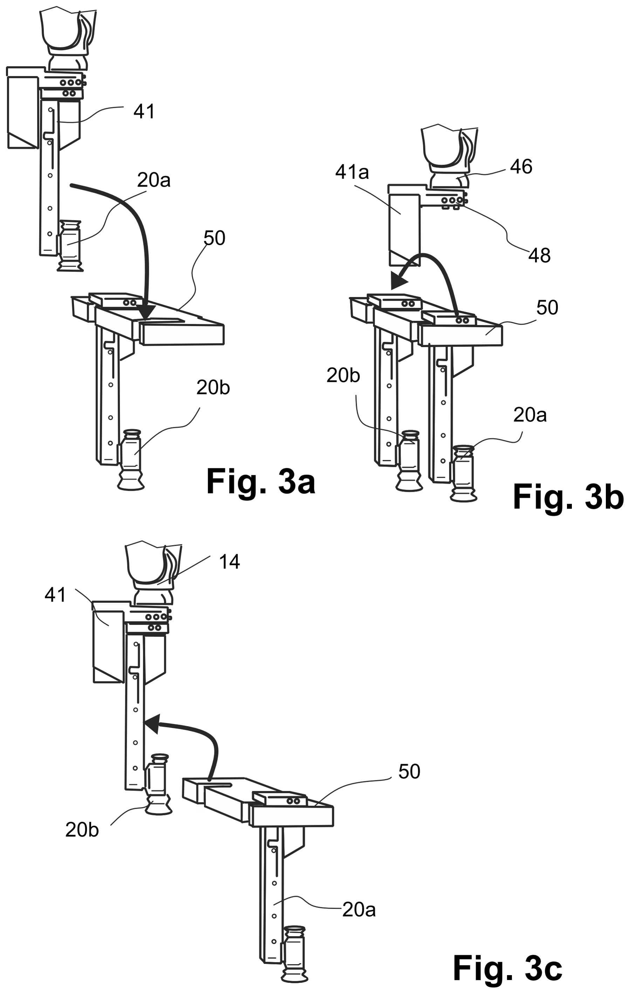

Seitlich am Sockel 12 umfasst der Kommissionierroboter 12 eine Werkzeugwechselvorrichtung 50 zur Bereitstellung verschiedenartiger Sauggreifer 20, die im Zusammenhang mit Fig. 3a - 3c näher beschrieben wird.

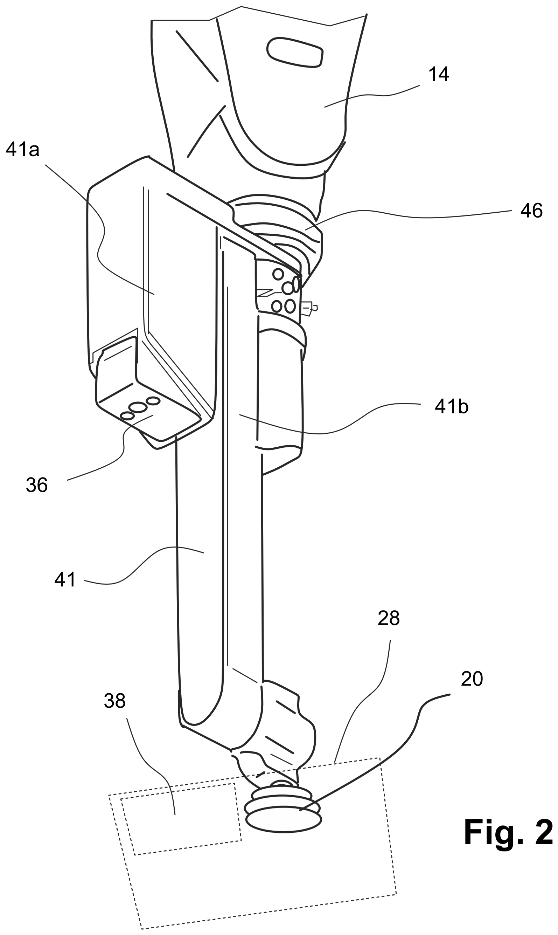

Figur 2 zeigt einem Endeffektor 41 für einen Kommissionierroboter 10, umfassend eine Befestigungsschnittstelle 44 zum Anschluss an eine Endschnittstelle 46 eines Greifarms 14 des Kommissionierroboters 10 und einen Sauggreifer 20 zum Greifen von zu kommissionierenden Artikeln 28.

Nach der Erfindung umfasst der Endeffektor 41 eine als BarcodeLeser ausgestaltete Bild- oder Datenerfassungsvorrichtung 36 zum Erfassen von auf dem Artikel 28 vorgesehenen Identifikationsinformationen, z.B. einem Barcode auf einem Etikett 38. Es sei bemerkt, dass die vom Barcodeleser 36 gelesenen Information nicht auf solche Informationen beschränkt sind, die im oben beschriebenen Etikettiervorgang mit Hilfe der Etikettiervorrichtung 32 auf den Artikel 28 aufgebracht wurden. Vielmehr kann es ich auch um Identifikationsinformationen handeln, die zuvor, z.B. von einem Hersteller, auf den Artikel 28 aufgebracht wurden.

Der Endeffektor 41 umfasst zwei Module 41a, 41b, wobei ein erstes der Module 41a die Bild- oder Datenerfassungsvorrichtung 36 umfasst und das zweite der Module 41b den Sauggreifer 20 umfasst.

Das zweite der Module 41b mit dem Sauggreifer 20 ist von der Endschnittstelle 46 eines Greifarms 14 lösbar und austauschbar, ohne das erste Modul 41a von der Endschnittstelle 46 zu lösen.

Fig. 3a - 3c zeigen einen Vorgang des Werkzeugwechsels, in diesem Fall des Austauschs eines ersten Sauggreifers 20a durch einen zweiten Sauggreifer 20b. Der Kommissionierroboter 10 umfasst eine Steuerung 22 und eine Bilderfassungsvorrichtung 18a, die wobei die Steuerung 22 dazu ausgelegt ist, mit Hilfe der Daten der Bilderfassungsvorrichtung 18a einen zu kommissionierenden Artikel 28 zu erkennen und abhängig von dem erkannten Artikel 28 den Greifarm 14 so zu steuern, dass ein geeigneter Sauggreifer 20a, 20b an der Endschnittstelle 46 eines Greifarms 14 befestigt wird. Um den Sauggreifer 20a, 20b zu tauschen, hängt die Steuerung 22 durch geeignete Steuerung des Greifarms 14 den ersten Sauggreifer 20a in die Werkzeugwechselvorrichtung 50 (Fig. 3a).

Das erste Modul 41b umfasst eine Sekundärschnittstelle 48 zum Anschluss des zweiten Moduls 41b mit dem Sauggreifer 20a, 20b, so dass das zweite Modul 41b mittelbar über das erste Modul 41a mit der Endschnittstelle 46 des Greifarms 14 verbunden ist. Diese Sekundärschnittstelle 48 wird nach dem Einhängen des ersten Sauggreifers 20a in die Werkzeugwechselvorrichtung 50 gelöst und der Greifarm 14 wird ohne ein zweites Modul 41b nur mit dem ersten Modul 41a zu einer Parkposition eines alternativen zweiten Moduls mit dem zweiten Sauggreifer 20b bewegt, der bzw. da dann mit der Sekundärschnittstelle 48 des ersten Moduls 41a verbunden wird (Fig 3b). Anschließend wird der nun mit dem zweiten Sauggreifer 20a ausgestattete Greifarm 14 angehoben und ist bereit zum Kommissionieren des erkannten Artikels 28.

Wieder Bezug nehmend auf Fig. 1 umfasst der Kommissionierroboter 10 eine zweite Bild- oder Datenerfassungsvorrichtung 52 zum Lesen von Identifikationsinformationen auf Seitenflächen des Artikels 28, die aus der Richtung der Bild- oder Datenerfassungsvorrichtung 36 nicht lesbar sind. Die zweite Bild- oder Datenerfassungsvorrichtung 52 ist an einem Sockel 12 des Kommissionierroboters 10 montiert.

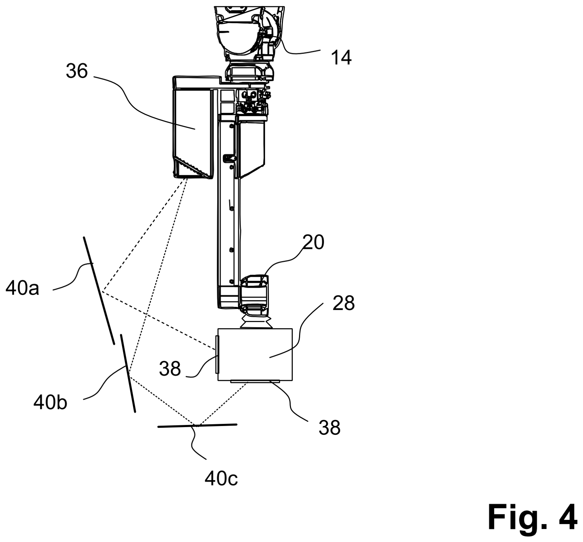

Fig. 4 zeigt eine weitere alternative Ausgestaltung der Erfindung, in der ein Spiegel 40a oder mehrere Spiegel 40b, 40c ortsfest oder bewegbar an geeigneten Positionen angeordnet sind und der am Greifarm 14 angeordnete Scanner beispielsweise durch einen Spiegel ein Etikett 38 auf einer Seitenfläche des Artikels 28 kontrollieren kann, während der Artikel 28 vom Sauggreifer 20 gehalten wird, oder durch zwei Spiegel ein Etikett 38 auf einer Unterseite des Artikels 28 kontrollieren kann, während der Artikel 28 vom Sauggreifer 20 gehalten wird. Die Steuerung 28 kann den Artikel 28 dabei um die in Fig. 4 vertikale Längsachse des Endeffektors 41 drehen, um verschiedene Seitenflächen des Artikels 28 einsehen zu können.

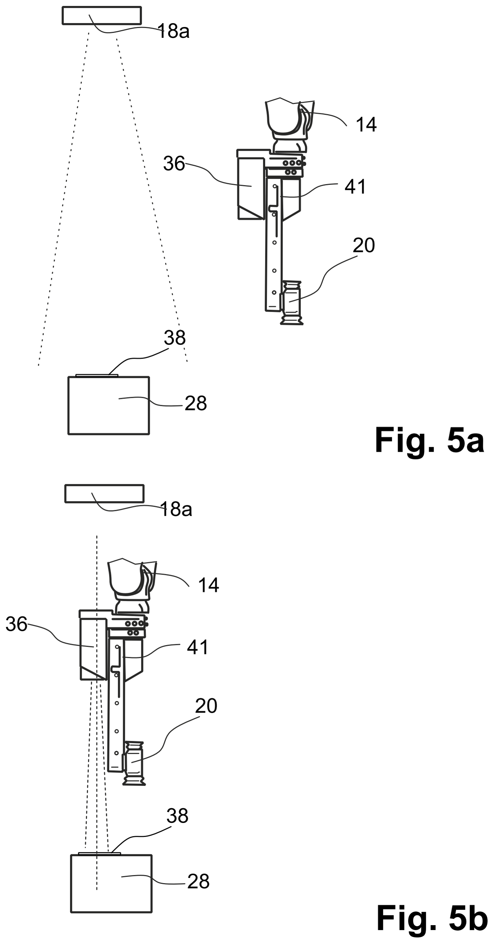

Fig. 5a - 5c zeigen Schritte eines erfindungsgemäßen Verfahrens zum Steuern eines Kommissionierroboters der oben beschriebenen Art.

In einem ersten Schritt wird mit der Kamera 18a eine Position eines Etiketts 38 mit Identifikationsinformationen auf einem Artikel 28 erfasst (Fig. 5a). Anschließend wird der Greifarm 14 derart gesteuert, dass die Bild- oder Datenerfassungsvorrichtung 36 in Richtung der Identifikationsinformationen ausgerichtet ist (Fig. 5b). In dieser Position wird die Identifikationsinformationen mit Hilfe der Bild- oder Datenerfassungsvorrichtung 36 gelesen.

Dann ermittelt die Steuerung 22 eine Greifpunkts des Artikels 28 aus den Bilddaten der Kamera 18a, wobei sie auch die Identifikationsinformationen nutzt, um artikelspezifische Greifpunkte aus einer Datenbank zu lesen. Die artikelspezifischen Greifpunkte berücksichtigen ungleichmäßige Gewichtsverteilungen und andere Besonderheiten des identifizierten Artikels 28.

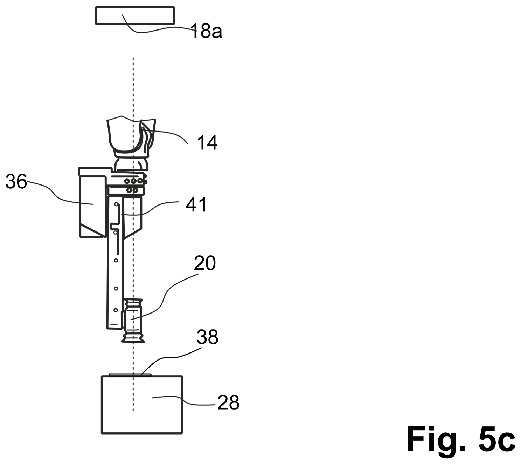

Dann wird der Greifarms 14 derart bewegt, dass der Sauggreifer in Richtung des zuvor ermittelten Greifpunkts des Artikels 28 ausgerichtet ist. Im Vergleich zwischen Fig. 5b und 5c beinhaltet dies eine Verschiebung des Endeffektors 41 bzw. Sauggreifers 20 nach rechts. Schließlich wird der Artikel 28 mit dem Sauggreifer 20 gegriffen und im Zielbehälter abgelegt.

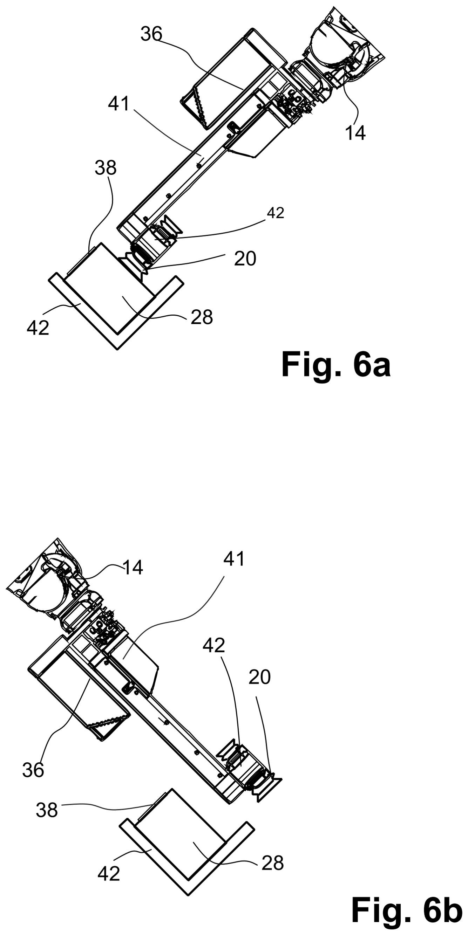

Fig. 6a, 6b zeigen weitere Ausgestaltungen der Erfindung, in dem der Kommissionierroboter 10 bzw. das Kommissioniersystem eine einer Ablage- und/oder Umgreifstation 42 umfasst die Steuerung 22 dazu ausgelegt ist, den Greifarm 14 so zu steuern, dass der Artikel 28 auf einer Ablage- und/oder Umgreifstation 42 abgelegt wird und dort mit der Etikettiervorrichtung 32 etikettiert wird.

In der in Fig. 6a und 6b dargestellten Ausführungsform wird der Artikel 28 auf der Ablage- und/oder Umgreifstation 42 abgelegt, gleitet über schräge Auflageflächen in einem Winkel und nimmt dadurch eine präzise definierte Position ein (Fig. 6a). Anschließend wird der Endeffektor 41 so gedreht, dass die Bild- oder Datenerfassungsvorrichtung 36 zu einer Seitenfläche des Artikels 28 hin ausgerichtet ist, an der ein Etikett 38 mit den Identifikationsinformationen angebracht ist (Fig. 6b), so dass die Identifikationsinformation gelesen werden kann. Anschließend wird der Artikel 28 vom Sauggreifer 20 an einer der zugänglichen Flächen gegriffen und im Zielbehälter 26 (nicht dargestellt) abgelegt.

Während in dem Ausführungsbeispiel aus Fig. 6a und 6b die Ablage- und/oder Umgreifstation 42 passiv sein kann, umfasst das Kommissioniersystem in dem in nicht dargestellten Ausführungsbeispiel einen von der Steuerung 22 betätigbaren Aktuator (nicht dargestellt). Die Steuerung 22 ist dazu ausgelegt, den Artikel 28 nach dem Ablegen (Fig. 5a) durch Betätigung des Aktuators mit der mit den Identifikationsinformationen versehenen Seite zur Datenerfassungsvorrichtung 36 zu drehen, die Identifikationsinformationen zu lesen den Artikel 28 durch Betätigung des Aktuators Auslesen der Identifikationsinformationen in gegebenenfalls zum Sauggreifer 20 zu drehen, so dass der Artikel 28 in der gewünschten Orientierung aufgenommen und im Zielbehälter 26 abgelegt werden kann.

Während der Sauggreifer 20 gemäß der Erfindung ein einzelner Sauggreifer 20 sein kann, umfasst der Sauggreifer 20 in den in Fig. 1 - 6 dargestellten Ausführungsbeispielen einen Endeffektor mit einem dreh- oder schwenkbaren Endbereich 42 mit mehreren, wahlwiese nutzbaren Werkzeugen, z.B. verschieden großen Sauggreifern 20 oder Sauggreifern 20 für Kartons oder Tüten.

### Bezugszeichenliste

- 10: Kommissionierroboter
- 12: Sockel
- 14: Greifarm
- 16: Tragarm
- 18a, 18b: Kamera
- 20: Sauggreifer
- 22: Steuerung
- 24: Quellbehälter
- 26: Zielbehälter 26
- 28: Artikel 28
- 30: Fördertechnik
- 32: Etiktettiervorrichtung
- 34: Höhenmessvorrichtung
- 36: Bild- oder Datenerfassungsvorrichtung bzw. Barcode-Scanner
- 38: Etikett
- 40a - 40c: Spiegel
- 41: Endeffektor
- 41a: Modul
- 41b: Modul
- 42: Endbereich
- 44: Befestigungsschnittstelle
- 46: Endschnittstelle
- 48: Sekundärschnittstelle
- 50: Werkzeugwechselvorrichtung

## Patentansprüche

1. Endeffektor (41) für einen Kommissionierroboter (10), umfassend eine Befestigungsschnittstelle (44) zum Anschluss an eine Endschnittstelle (46) eines Greifarms (14) des Kommissionierroboters (10) und einen Sauggreifer (20) zum Greifen von zu kommissionierenden Artikeln (28),
**dadurch gekennzeichnet, dass** der Endeffektor (41) eine Bild- oder Datenerfassungsvorrichtung (36) zum Erfassen von auf dem Artikel (28) vorgesehenen Identifikationsinformationen umfasst.

2. Endeffektor (41) nach Anspruch 1,
**dadurch gekennzeichnet, dass** der Endeffektor (41) wenigstens zwei Module (41a, 41b) umfasst, wobei ein erstes der Module (41a) die Bild- oder Datenerfassungsvorrichtung (36) umfasst und das zweite der Module (41b) den Sauggreifer (20) umfasst.

3. Endeffektor (41) nach Anspruch 2,
**dadurch gekennzeichnet, dass**
das zweite der Module (41b) mit dem Sauggreifer (20) von der Endschnittstelle (46) eines Greifarms (14) lösbar und austauschbar ist, ohne das erste Modul (41a) von der Endschnittstelle zu lösen.

4. Endeffektor (41) nach Anspruch 3,
**dadurch gekennzeichnet, dass**
das erste Modul (41b) eine Sekundärschnittstelle (48) zum Anschluss des zweiten Moduls (41b) mit dem Sauggreifer (20) umfasst, so dass das zweite Modul (41b) mittelbar über das erste Modul (41a) mit der Endschnittstelle (46) des Greifarms (14) verbunden ist.

5. Kommissionierroboter (10) mit einem Endeffektor (41) nach einem der vorhergehenden Ansprüche.

6. Kommissionierroboter (10) nach Anspruch 5,
**gekennzeichnet durch** eine zweite Bild- oder Datenerfassungsvorrichtung (52) lesen von Identifikationsinformationen auf Seitenflächen des Artikels (28), die aus der Richtung der Bild- oder Datenerfassungsvorrichtung (36) nicht lesbar sind.

7. Kommissionierroboter (10) nach Anspruch 6,
**dadurch gekennzeichnet, dass** die zweite Bild- oder Datenerfassungsvorrichtung (52) an einem Sockel (12) des Kommissionierroboters (10) montiert ist.

8. Kommissionierroboter (10) nach einem der vorhergehenden Ansprüche,
**gekennzeichnet durch** einen oder mehrere ortsfest oder bewegbar angeordnete Spiegel (40a, 40b, 40c), die so angeordnet sind, dass die Endeffektor (41) angeordnete eine Bild- oder Datenerfassungsvorrichtung (36) die Identifikationsinformationen über den Spiegel (40a, 40b, 40c)von einer Seitenfläche des Artikels (28) oder von einer Unterseite des Artikels 28 ablesen kann, während der Artikel (28) vom Sauggreifer (20) gehalten wird.

9. Robotersystem mit einem Kommissionierroboter (10) einem der Ansprüche 5 - 8 und einer Werkzeugwechselvorrichtung (50) zur Bereitstellung verschiedenartiger Sauggreifer (20), wobei der Kommissionierroboter (10) eine Steuerung (22) und eine Bilderfassungsvorrichtung (18a) umfasst, die wobei die Steuerung (22) dazu ausgelegt ist, mit Hilfe der Daten der Bilderfassungsvorrichtung (18a) einen zu kommissionierenden Artikel (28) zu erkennen und abhängig von dem erkannten Artikel (28) den Greifarm (14) so zu steuern, dass ein geeigneter Sauggreifer (20) an der Endschnittstelle (46) eines Greifarms (14) befestigt wird.

10. Verfahren zum Steuern eines Kommissionierroboters nach einem der Ansprüche 5 - 8,
**gekennzeichnet durch** die Schritte:
Erfassen einer Position von Identifikationsinformationen auf einem Artikel (28);
Steuern des Greifarms (14) derart, dass die Bild- oder Datenerfassungsvorrichtung (36) in Richtung der Identifikationsinformationen ausgerichtet ist;
Lesen der Identifikationsinformationen mit Hilfe der Bild- oder Datenerfassungsvorrichtung (36);
Ermitteln eines Greifpunkts des Artikels (28);
Bewegen des Greifarms (14) derart, dass der Sauggreifer in Richtung eines Greifpunkts des Artikels (28) ausgerichtet ist; und
Greifen des Artikels (28) mit dem Sauggreifer (20).

11. Verfahren nach Anspruch 10,
**dadurch gekennzeichnet, dass**
das Ermitteln des Greifpunkts des Artikels (28) abhängig von den Identifikationsinformationen erfolgt.
